(19) Europäisches Patentamt

European Patent Office

Office européen des brevets

(11) EP 2 031 543 A1

(12) EUROPEAN PATENT APPLICATION

(43) Date of publication:
04.03.2009 Bulletin 2009/10

(51) Int Cl.:
G06K 7/08 (2006.01)

(21) Application number: 08163438.8

(22) Date of filing: 01.09.2008

(84) Designated Contracting States:
AT BE BG CH CY CZ DE DK EE ES FI FR GB GR
HR HU IE IS IT LI LT LU LV MC MT NL NO PL PT
RO SE SI SK TR
Designated Extension States:
AL BA MK RS

(30) Priority: 31.08.2007 CN 200710145930

(71) Applicant: G-Time Electronic Co., Ltd.
Siangshan District
Hsinchu City 300 (TW)

(72) Inventors:
• Hou, Tien-Fa
East District, HSINCHU CITY 300, (TW)
• Wu, Che-Ming
DONGSHIH TOWNSHIP, TAICHUNG COUNTY 423 (TW)
• Wu, Ying-Feng
Heping Township, TAICHUNG COUNTY 424 (TW)

(74) Representative: Epping - Hermann - Fischer
Patentanwaltsgesellschaft mbH
Ridlerstraße 55
80339 München (DE)

(54) Radio frequency identification (RFID) positioning apparatus and method thereof

(57) This invention discloses a RFID positioning apparatus and a method for identifying and positioning at least one RFID tag. The apparatus comprises a transmission module for transmitting a frequency, a capacitor, sensing modules, an identification module and circuit modules. A first switching unit of the sensing module performs a connection operation according to the frequency to form a magnetic flux of a induction coil and the capacitor, such that the first induction coil senses an identification signal of a RFID tag. The identification module receives the identification signal for identifying and positioning the RFID tag. Each circuit module is connected to the transmission module, sensing module, capacitor and identification module, and transmits the identification signal. The circuit modules have substantially equal length to achieve a matched status of all induction coils.

FIG. 4C

EP 2 031 543 A1

## Description

## BACKGROUND OF THE INVENTION

## Field of the Invention

The present invention relates to a radio frequency identification (RFID) positioning apparatus and its method, and more particularly to a RFID positioning apparatus having a plurality of circuits with substantially same lengths to enable the induction coil being matched status in order to identify and position a RFID tag.

## Description of the Related Art

Radio Frequency Identification System (RFID) has a radio frequency identification function without being in contact directly with an object. As long as the RFID system is situated within a sensing range of the radio frequency signals, the identification signal in the RFID tag can be read to identify an object or a data, and thus the RFID tag can be used for the identification purpose. Since the radio frequency identification system usually has the identification function only, but it does not have a positioning function, and its application is limited. Therefore, it is an important subject to integrate the positioning function into a radio frequency identification system to identify and position a plurality of RFID tags.

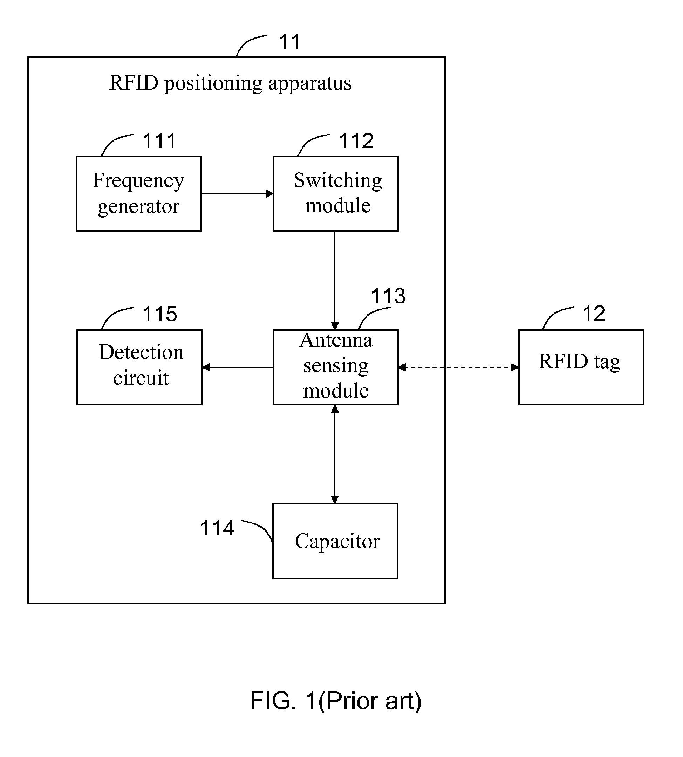

With reference to FIG. 1 for a schematic view of a conventional RFID positioning apparatus used for identifying and positioning at least one RFID tag 12, the conventional RFID positioning apparatus 11 includes a frequency generator 111, a switching module 112, an antenna sensing module 113, a capacitor 114 and a detection circuit 115. The frequency generator 111 generates a frequency for the switching module 112 to perform a switching operation. The antenna sensing module 113, capacitor 114 and frequency generator 111 define a resonant circuit, and the antenna sensing module 113 generates a resonant magnetic flux. If a RFID tag 12 is situated within a detectable range, the RFID tag 12 will be coupled by a magnetic field and charged to emit an identification signal. The detection circuit 115 detects a change of magnetic flux to identify and position of a data transmitted from the RFID tag 12.

However, the foregoing prior art still has the following drawbacks. Circuits of a conventional RFID positioning apparatus 11 usually do not come with equal lengths, and thus the induction coils in the antenna sensing module 113 cannot achieve a matched status or produce a resonance easily. When the antenna sensing module 113 and the capacitor 114 produce a magnetic flux, the antenna sensing module 113 cannot detect the identification signal of the RFID tag 12 accurately. In general, the RFID positioning apparatus 11 contains an antenna sensing module 113 only, so that the magnetic flux produced by the antenna sensing module 113 is relatively weak, and the sensing capability is relatively poor. Furthermore, the RFID positioning apparatus 11 has a switching module 112 only, and thus the detection circuit 115 may receive two identification signals at the same time and can hardly identify and position the RFID tag 12. In addition, the RFID positioning apparatus 11 does not come with a grounding function, so that the magnetic fields produced by the induction coils in the antenna sensing module 113 interfere with each other.

To overcome the foregoing shortcomings of the prior art, the inventor of the present invention based on years of experience in the related industry to conduct extensive researches and experiments, and finally developed a RFID positioning apparatus and invented a method to overcome the shortcomings of the prior art.

## Summary of the Invention

It is a primary objective of the present invention to provide a RFID positioning apparatus and its method, particularly a RFID positioning apparatus having circuit modules with a substantially equal length, such that induction coils can achieve a matched status for identifying and positioning a RFID tag to satisfy a user's requirement of the RFID positioning apparatus and overcome the shortcomings of the prior art. In addition to achieving a matched status of the induction coils to sense the identification signals correctly, the present invention also improve the sensing capability of the induction coils, and the identification module will not receive two identification signals at the same time, and the magnetic fields of the induction coils will no longer interfere with each other.

To achieve the foregoing objective, the present invention provides a RFID positioning apparatus capable of identifying and positioning at least one RFID tag, and the apparatus comprises a transmission module, at least one capacitor, a plurality of sensing modules, an identification module and a plurality of circuit modules. The transmission module transmits a frequency. In the plurality of sensing modules, each sensing module comprises a first switching unit and at least one induction coil. The first switching unit selectively performs a connection operation and a disconnection operation according to the frequency. The connection operation drives the first induction coil and the capacitor to form a magnetic flux and the magnetic flux drives the first induction coil to sense an identification signal of a RFID tag. In addition, the identification module receives an identification signal to identify and position the RFID tag. In the plurality of circuit modules, each circuit module is coupled to the transmission module, one of the sensing modules, the capacitor and the identification module, and transmits the identification signal. The circuit modules with a substantially equal length achieve a matched status of all induction coils.

In addition, the present invention further provides a RFID positioning method, comprising the steps of:

(a) providing a RFID positioning apparatus, wherein the apparatus comprises a transmission module, a capacitor, a plurality of sensing modules, an identification module and a plurality of circuit modules, and each sensing module comprises a first switching unit and at least one induction coil, and each circuit module is coupled to the transmission module, one of the sensing modules, the capacitor and the identification module, and the circuit modules have a substantially equal length;

(b) transmitting a frequency through the transmission module;

(c) driving one of the first switching units of the sensing module to perform a connection operation, and the others of the first switching units to perform a disconnection operation ;

(d) forming a magnetic flux of the first induction coil and the capacitor by the connection operation, wherein the magnetic flux drives the first induction coil to sense an identification signal of a RFID tag;

(e) transmitting the identification signal through one of the circuit modules; and

(f) using an identification module to receive an identification signal, for identifying and positioning the RFID tag.

With these and other objects, advantages, and features of the invention that may become hereinafter apparent, the nature of the invention may be more clearly understood by reference to the detailed description of the invention, the preferred embodiments and to the several drawings herein.

**BRIEF DESCRIPTION OF THE DRAWINGS**

The subject matter regarded as the invention is particularly pointed out and distinctly claimed in the concluding portion of the specification. The invention together with features and advantages thereof may best be understood by reference to the following detailed description with the accompanying drawings in which:

FIG. 1 is a schematic view of a conventional RFID positioning apparatus;

FIG. 2 is a schematic view of a RFID positioning apparatus of the present invention;

FIG. 3 is a schematic view of operating a RFID positioning apparatus in accordance with a preferred embodiment of the present invention;

FIG. 4A is a schematic view of circuit modules with unequal lengths in accordance with a prior art;

FIG. 4B is a schematic view of comparing circuit modules with unequal lengths in accordance with a prior art;

FIG. 4C is a schematic view of circuit modules of a RFID positioning apparatus in accordance with the present invention;

FIG. 4D is a schematic view of comparing circuit modules of a RFID positioning apparatus in accordance with the present invention;

FIG. 4E is a table of comparing the inductances of induction coils as depicted in FIG. 4A and 4C; and

FIG. 5 is a flow chart of a RFID positioning method in accordance with the present invention.

**DETAILED DESCRIPTION OF THE PREFERRED EMBODIMENTS**

While the specifications describe at least one embodiment of the invention considered best modes of practicing the invention, it should be understood that the invention can be implemented in many ways and is not limited to the particular examples described below or to the particular manner in which any features of such examples are implemented.

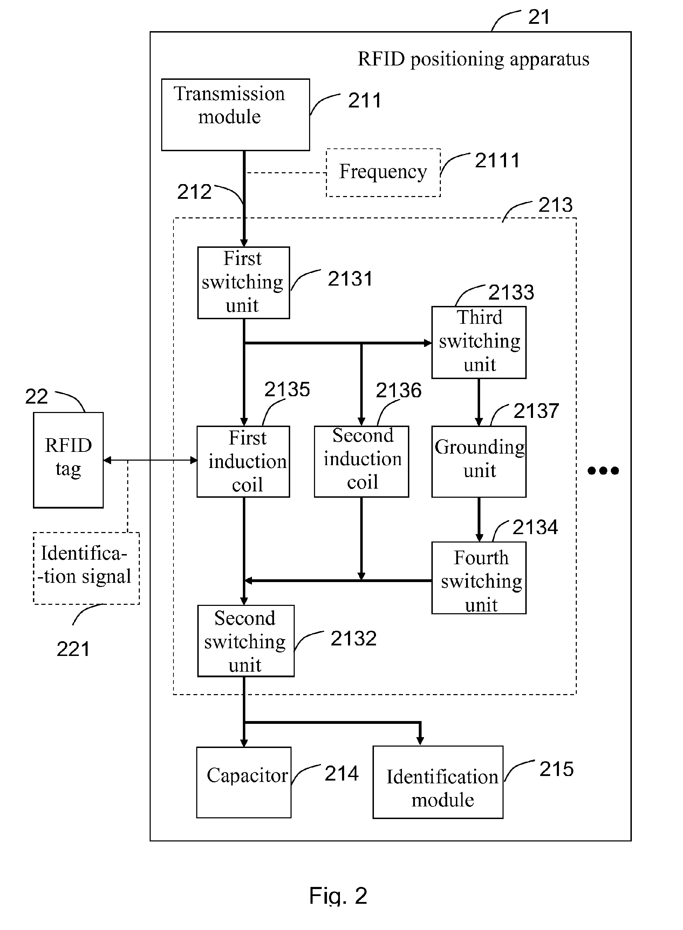

With reference to FIG. 2 for a schematic view of a RFID positioning apparatus in accordance with the present invention, the RFID positioning apparatus 21 is capable of identifying and positioning at least one RFID tag 22, and the RFID positioning apparatus 21 comprises a transmission module 211, at least one capacitor 214, a plurality of sensing modules 213, an identification module 215 (such as a detection circuit) and a plurality of circuit modules 212. The transmission module 211 transmits a frequency 2111. The plurality of sensing modules 213 are arranged according to a predetermined arrangement manner, such as a serial connection, a parallel connection, a two-dimensional array, a three-dimensional array or any other arrangement. Each sensing module 213 comprises a first switching unit 2131, a first induction coil 2135 and a second induction coil 2136. The first switching unit 2131 selectively performs a connection operation and a disconnection operation according to a frequency 2111, and only one of the first switching units performs the connection operation one at a time. The connection operation drives the first induction coil 2135 and the capacitor 214 to form a magnetic flux, and the magnetic flux drives the first induction coil 2135 to sense an identification signal 221 of a RFID tag 22. The second induction coil 2136 and the first induction coil 2135 are connected in parallel for strengthening a magnetic flux. In addition, the capacitor 214 is a first variable capacitor for adjusting a first capacitance to change the magnetic flux or a fixed capacitor together with a second capacitor, and the second variable capacitor is provided for adjusting a second capacitance to change the magnetic flux, and the second variable capacitor has a higher precision than the first variable capacitor.

In addition, the identification module 215 receives an identification signal 221 for identifying the RFID tag 22, and positioning the RFID tag 22 according to a position of the first induction coil 2135. In the plurality of circuit modules, each circuit module 212 (as indicated by the bold line) is coupled to the transmission module 211, one of the sensing modules (such as the sensing module 213), the capacitor 214 the and identification module 215, and transmits the identification signal 221. The circuit modules 212 have a substantially equal length to achieve a matched status of all induction coils for reducing the error of inductance of all induction coils. In addition, each sensing module 213 can add a second switching unit 2132, a grounding unit 2137, a third switching unit 2133 and a fourth switching unit 2134. The second switching unit 2132 is used to avoid transmitting two identification signals 221 to the identification module 215 at the same time. The grounding unit 2137 is used to avoid other induction coils from interfering the first induction coil 2135 and the second induction coil 2136. The third switching unit 2133 and the fourth switching unit 2134 are used for grounding the first induction coil 2135 and the second induction coil 2136 through the grounding unit 2137.

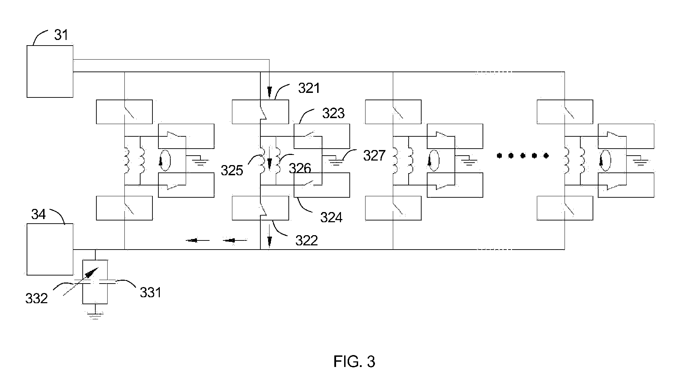

With reference to FIG. 3 for a schematic view of operating a RFID positioning apparatus in accordance with a preferred embodiment of the present invention, the invention provides a RFID positioning apparatus comprising a transmission module 31, a plurality of sensing modules, a fixed capacitor 331, a variable capacitor 332, a detection circuit 34 and a plurality of circuit modules. The sensing modules are arranged according to an arrangement manner, and each sensing module comprises a first switching unit 321, a first induction coil 325 and a second induction coil 326, or adds a second switching unit 322, a grounding unit 327, a third switching unit 323 and a fourth switching unit 324. Each circuit module is coupled to the transmission module 31, one of the sensing modules, the fixed capacitor 331, the variable capacitor 332 and the detection circuit 34. The circuit modules have a substantially equal length for achieving a matched status of all induction coils to reduce the error of inductance of all induction coils.

The transmission module 31 transmits a frequency provided for the first switching unit 321 and the second switching unit 322 to perform a connection operation and other first switching units and second switching units perform a disconnection operation according to the frequency. The third switching unit 323 and the fourth switching unit 324 perform a disconnection operation to avoid grounding the first induction coil 325 and the second induction coil 326. Other third switching units and fourth switching units perform a connection operation to ground other first induction coils and second induction coils. The first induction coil 325, fixed capacitor 331 and variable capacitor 332 define a magnetic flux, and the magnetic flux drives the first induction coil 325 to sense an identification signal of a RFID tag. In the meantime, the second induction coil 326 and the first induction coil 325 are connected in parallel for strengthening the magnetic flux. Finally, one of the circuit modules transmits an identification signal (as indicated by the arrow). The detection circuit 34 is used for receiving the identification signal to identify the RFID tag and position the RFID tag according to a position of the first induction coil 325.

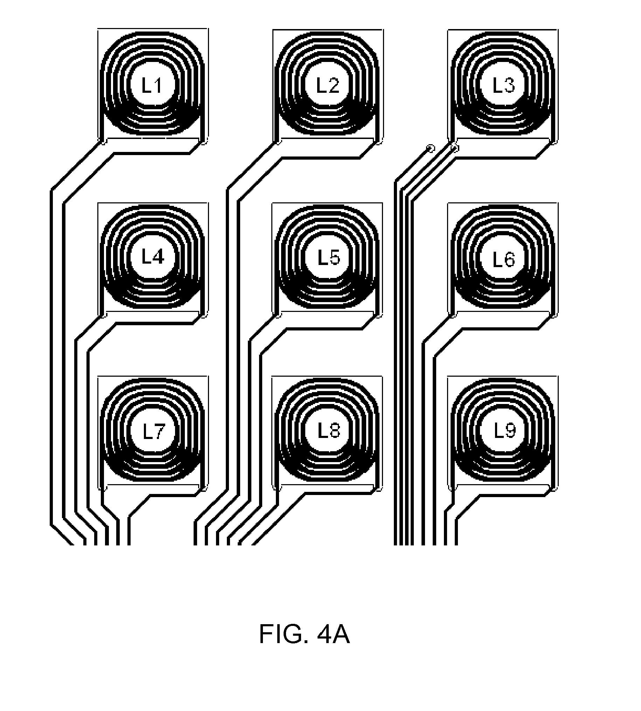

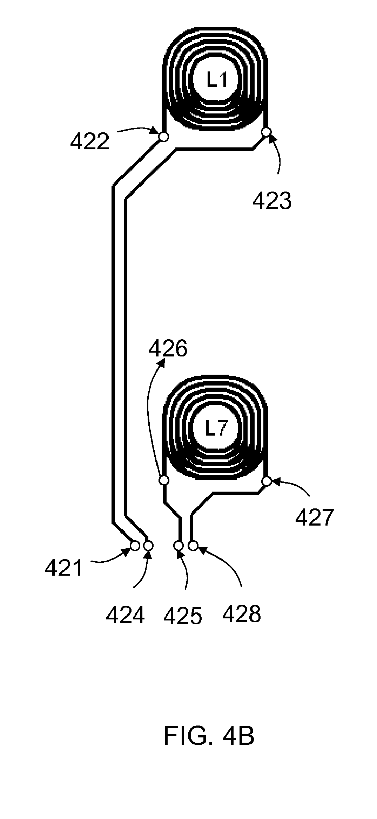

With reference to FIGS. 4A to 4E, FIG. 4A shows a schematic view of circuit modules with an unequal length in accordance with a prior art, the induction coils L1 to L9 are arranged in a two-dimensional 3x3 array, and the circuit modules of each induction coil have unequal lengths. FIG. 4B shows a schematic view of comparing circuit modules of the induction coils L1 to L9 as depicted in FIG. 4A, and the lengths of the two circuit modules are compared by the following method. The length of the circuit module of the induction coil L1 is the distance measured from Position 421 to Position 422 plus the distance measured from Position 423 to Position 424, and the length of the circuit module of the induction coil L7 is the distance measured from Position 425 to Position 426 plus the distance measured from Position 427 to Position 428. Since the two circuit modules have unequal lengths, the inductances of the induction coil L1 and the induction coil L7 are unequal.

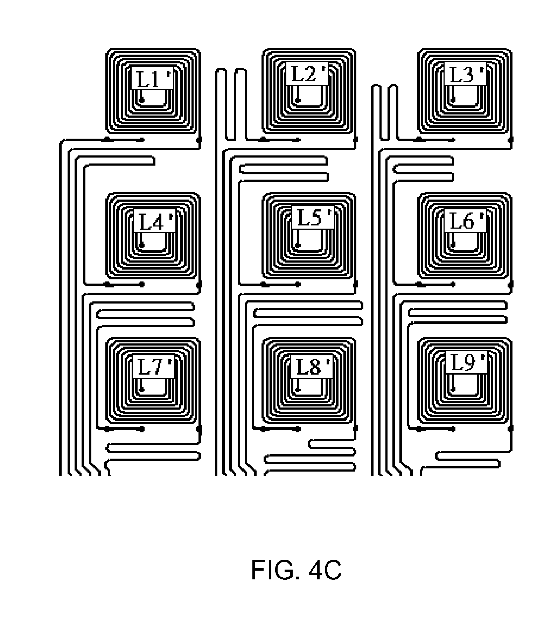

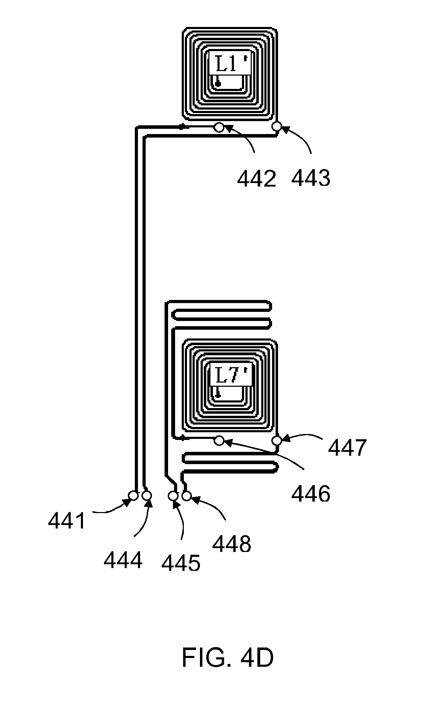

FIG. 4C shows a schematic view of circuit modules of a RFID positioning apparatus in accordance with the present invention, the induction coils L1' to L9' are arranged in a two-dimensional 3x3 array, and the circuit modules connected by each induction coil have a substantially length. FIG. 4D compares circuit modules of a RFID positioning apparatus in accordance with the present invention, and shows the circuit modules of the induction coil L1' and the induction coil L7' as depicted in FIG. 4C. The lengths of the two circuit modules are compared as follows: The length of the circuit module of the induction coil L1' is the distance measured from Position 441 to Position 442 plus the distance measured from Position 443 to Position 444, and the length of the circuit module of the induction coil L7' is the distance measured from Position 445 to Position 446 plus the distance measured from Position 447 to Position 448. Since the two circuit modules have a substantially equal length, the inductances of the induction coil L1' and the induction coil L7' are also substantially equal.

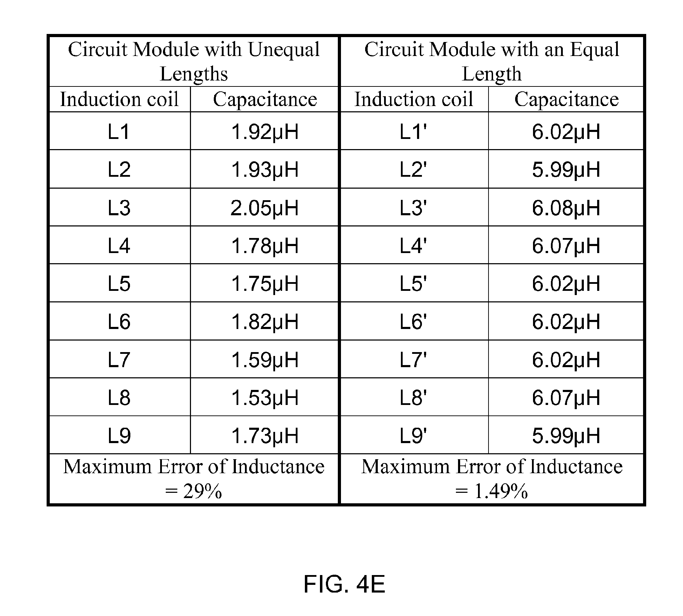

With reference of FIG. 4E for the comparison table of inductances of the induction coils as depicted in FIGS. 4A and 4C, the maximum error of inductance of the induction coil in the circuit modules with unequal lengths as depicted in FIG. 4A is equal to 29%. In the circuit modules with an equal length of the present invention as depicted in FIG. 4C, the maximum error of induction of the induction coil is equal to 1.49% only. The maximum error of inductance = (Maximum Inductance Lmax - Minimum Inductance Lmin)/Average Inductance Lavg. Since the resonant frequency

$$\text{frequency}\quad f = 1/(2\pi \times \sqrt{LC})\ ,$$

, the resonant frequency is proportional to $\sqrt{C}$ ($f \propto 1/(\sqrt{C})$ if the capacitance is fixed. In circuit modules with unequal lengths, the error of inductance is too large, and thus all induction coils will not produce a resonance easily to reduce the sensing capability of all induction coils, and thus all circuit modules must be designed to have substantially the same length for achieving a matched status of all induction coils, so as to accurately sense the identification signal.

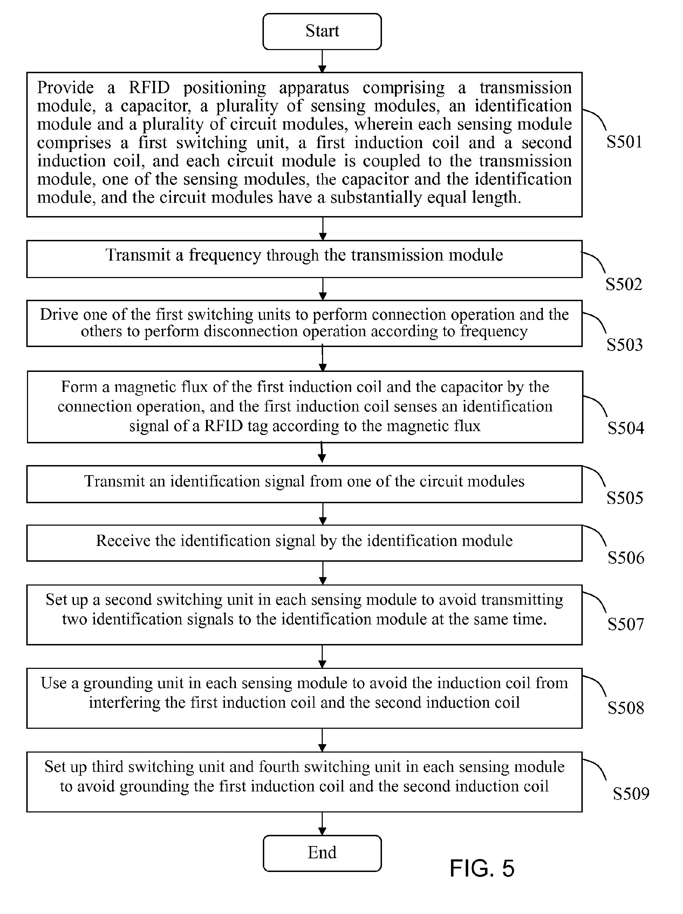

With reference to FIG. 5 for a flow chart of a RFID positioning method in accordance with the present invention, the method corresponds to the RFID positioning apparatus as depicted in FIG. 2 comprises the Steps S501 to S507, and can add the Steps S508 to S510.

Step S501: Provide a RFID positioning apparatus 21, comprising a transmission module 211, at least one capacitor 214, a plurality of sensing modules 213, an identification module 215 (such as a detection circuit) and a plurality of circuit modules 212. The sensing modules 213 are arranged according to a predetermined arrangement manner, and each sensing module 213 comprises a first switching unit 2131, a first induction coil 2135 and a second induction coil 2136. The second induction coil 2136 and the first induction coil 2135 are connected in parallel for strengthening the magnetic flux. Each circuit module 212 (indicated by the portion with a bold line in the figure) is connected to the transmission module 211, one of the sensing modules (such as the sensing module 213), the capacitor 214 and the identification module 215. The circuit modules 212 have a substantially equal length to achieve a matched status of all induction coils for reducing the error of inductance of all induction coils.

Step S502: Transmit a frequency 2111 through the transmission module 211.

Step S503: Drive one of the first switching units (such as the first switching unit 2131) of the sensing modules to perform a connection operation and the others of the first switching units to perform a disconnection operation .

Step S504: Form a magnetic flux of the first induction coil 2135 and the capacitor 214 by the connection operation, and the magnetic flux drives the first induction coil 2135 to sense an identification signal 221 of a RFID tag 22.

Step S505: Transmit an identification signal 221 from one of the circuit modules, such as the circuit module 212.

Step S506: Receive the identification signal 221 by the identification module 215 to identify the RFID tag 22, and position the RFID tag 22 according to a position of the first induction coil 2135. Repeat Steps S502 to S507, if it is necessary to identify and position a plurality of RFID tags at the same time.

Step S507: Set up a second switching unit 2132 in each sensing module 213 to avoid transmitting two identification signals 221 to the identification module 215 at the same time.

Step S508: Use a grounding unit 2137 in each sensing module 213 to avoid the induction coil from interfering the first induction coil 2135 and the second induction coil 2136.

Step S509: Set up a third switching unit 2133 and a fourth switching unit 2134 in each sensing module 213 to avoid grounding the first induction coil 2135 and the second induction coil 2136.

While the invention has been described in a way of a preferred embodiment, it is to be understood that the invention is not limited thereto. To the contrary, it is intended to cover various modifications and similar arrangements and procedures, and the scope of the appended claims therefore should be accorded the broadest interpretation so as to encompass all such modifications and similar arrangements and procedures.

## Claims

1. A radio frequency identification (RFID) positioning apparatus, capable of identifying and positioning at least one RFID tag, and the RFID positioning apparatus comprising:

   a transmission module capable of transmitting a frequency;
   at least one capacitor;
   a plurality of sensing modules, each having a first switching unit, at least one induction coil, and the first switching unit selectively performing a connection operation and a disconnection operation, wherein the connection operation makes a magnetic flux formed in the induction coil and the capacitor, such that the induction coil senses an identification signal of the RFID tag according to the magnetic flux;
   an identification module capable of receiving the identification signal to identify and position the RFID tag; and
   a plurality of circuit modules, each circuit module connected to the transmission module, one of the sensing modules, the capacitor and the identification module, for transmitting the identification signal;
   wherein, the circuit modules have a length substantially equal to each other to enable all induction coils being a match status.

2. The apparatus of claim 1, wherein each sensing module further includes a second switching unit, for avoiding two identification signals from transmitting to the identification module at the same time.

**3.** The apparatus of claim 1, wherein each sensing module further includes a grounding unit, for avoiding other induction coils from interfering the induction coil.

**4.** The apparatus of claim 1, wherein each sensing module further includes a third switching unit and a fourth switching unit, for grounding the induction coil.

**5.** The apparatus of claim 1, wherein the induction coil further comprises a plurality of parallel connected coils to enhance magnetic flux.

**6.** The apparatus of claim 1, wherein only one of the first switching units of the sensing modules perform a connection operation at a time.

**7.** The apparatus of claim 1, wherein the capacitor includes a fixed capacitor and a second variable capacitor, and the second variable capacitor is provided for adjusting a second capacitance to change the magnetic flux.

**8.** The apparatus of claim 1, wherein the identification module positions the RFID tag according to a position of the first induction coil.

**9.** The apparatus of claim 1, wherein the circuit modules have a length substantially equal to each other for reducing error of inductance of all induction coils.

**10.** A radio frequency identification (RFID) positioning method, comprising the steps of:

  (a) providing a RFID positioning apparatus, and the apparatus comprising a transmission module, at least one capacitor, a plurality of sensing modules, an identification module and a plurality of circuit modules, and each sensing module having a first switching unit and at least one induction coil, and each circuit module being connected to the transmission module, one of the sensing modules, the capacitor and the identification module, and the circuit modules having a length substantially equal to each other;
  (b) transmitting a frequency by the transmission module;
  (c) performing a connection operation to the first switching unit of one of the sensing modules and a disconnection operation to the others of the first switching units;
  (d) forming a magnetic flux of the first induction coil and the capacitor by the connection operation, wherein the first induction coil senses an identification signal of a RFID tag according to the magnetic flux;
  (e) transmitting the identification signal through one of the circuit modules; and

  (f) using the identification module to receive the identification signal, for identifying and positioning the RFID tag.

**11.** The method of claim 10, further comprising a Step (g) of setting up a second switching unit in each sensing module after the Step (f), for avoiding two identification signals from transmitting to the identification module at the same time.

**12.** The method of claim 11, further comprising a Step (h) of using a grounding unit in each sensing module after the Step (g) to avoid other induction coils from interfering the induction coil.

**13.** The method of claim 12, further comprising a Step (i) of setting up a third switching unit and a fourth switching unit in each sensing module after the Step (h), for grounding the induction coil.

**14.** The method of claim 10, wherein the capacitor includes a fixed capacitor and a second variable capacitor, and the second variable capacitor is provided for adjusting a second capacitance to change the magnetic flux.

**15.** The method of claim 10, wherein the identification module positions the RFID tag according to a position of the first induction coil.

**16.** The method of claim 10, wherein the circuit modules have a length substantially equal to each other, for reducing error of induction of all induction coils.

FIG. 1(Prior art)

Fig. 2

FIG. 3

FIG. 4A

FIG. 4B

FIG. 4C

FIG. 4D

| Circuit Module with Unequal Lengths | | Circuit Module with an Equal Length | |
|---|---|---|---|
| Induction coil | Capacitance | Induction coil | Capacitance |
| L1 | 1.92μH | L1' | 6.02μH |
| L2 | 1.93μH | L2' | 5.99μH |
| L3 | 2.05μH | L3' | 6.08μH |
| L4 | 1.78μH | L4' | 6.07μH |
| L5 | 1.75μH | L5' | 6.02μH |
| L6 | 1.82μH | L6' | 6.02μH |
| L7 | 1.59μH | L7' | 6.02μH |
| L8 | 1.53μH | L8' | 6.07μH |
| L9 | 1.73μH | L9' | 5.99μH |
| Maximum Error of Inductance = 29% | | Maximum Error of Inductance = 1.49% | |

FIG. 4E

Start

Provide a RFID positioning apparatus comprising a transmission module, a capacitor, a plurality of sensing modules, an identification module and a plurality of circuit modules, wherein each sensing module comprises a first switching unit, a first induction coil and a second induction coil, and each circuit module is coupled to the transmission module, one of the sensing modules, the capacitor and the identification module, and the circuit modules have a substantially equal length.
S501

Transmit a frequency through the transmission module
S502

Drive one of the first switching units to perform connection operation and the others to perform disconnection operation according to frequency
S503

Form a magnetic flux of the first induction coil and the capacitor by the connection operation, and the first induction coil senses an identification signal of a RFID tag according to the magnetic flux
S504

Transmit an identification signal from one of the circuit modules
S505

Receive the identification signal by the identification module
S506

Set up a second switching unit in each sensing module to avoid transmitting two identification signals to the identification module at the same time.
S507

Use a grounding unit in each sensing module to avoid the induction coil from interfering the first induction coil and the second induction coil
S508

Set up third switching unit and fourth switching unit in each sensing module to avoid grounding the first induction coil and the second induction coil
S509

End

FIG. 5

Europäisches
Patentamt

European
Patent Office

Office européen
des brevets

# EUROPEAN SEARCH REPORT

**Application Number**

EP 08 16 3438

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2007/182660 A1 (WU CHE-MING [TW] ET AL) 9 August 2007 (2007-08-09) * the whole document * | 1,10 | INV. G06K7/08 |
| A | US 2007/013541 A1 (HARAZIN RICHARD R [US] ET AL) 18 January 2007 (2007-01-18) * the whole document * | 1,10 | |
| A | US 2006/273907 A1 (HEIMAN MORAD [IL] ET AL) 7 December 2006 (2006-12-07) * figure 9 * | 1,10 | |
| A | WO 2004/095353 A (ALCEA [FR]; POASEVARA CLAUDE [FR]) 4 November 2004 (2004-11-04) * the whole document * | 1,10 | |
| | | | **TECHNICAL FIELDS SEARCHED (IPC)** |
| | | | G06K H01Q G08B |

The present search report has been drawn up for all claims

| Place of search | Date of completion of the search | Examiner |
|---|---|---|
| The Hague | 26 November 2008 | de Ronde, Jan |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 08 16 3438

This annex lists the patent family members relating to the patent documents cited in the above-mentioned European search report.
The members are as contained in the European Patent Office EDP file on
The European Patent Office is in no way liable for these particulars which are merely given for the purpose of information.

26-11-2008

| Patent document cited in search report | | Publication date | Patent family member(s) | | Publication date |
|---|---|---|---|---|---|
| US 2007182660 | A1 | 09-08-2007 | CN<br>EP<br>JP | 1929332 A<br>1816705 A1<br>2007213552 A | 14-03-2007<br>08-08-2007<br>23-08-2007 |
| US 2007013541 | A1 | 18-01-2007 | NONE | | |
| US 2006273907 | A1 | 07-12-2006 | NONE | | |
| WO 2004095353 | A | 04-11-2004 | CA<br>EP<br>FR | 2522516 A1<br>1616284 A2<br>2853982 A1 | 04-11-2004<br>18-01-2006<br>22-10-2004 |

For more details about this annex : see Official Journal of the European Patent Office, No. 12/82